## Europäisches Patentamt
## European Patent Office
## Office européen des brevets

(11) Veröffentlichungsnummer: **0 212 322**
**A2**

# (12) EUROPÄISCHE PATENTANMELDUNG

(21) Anmeldenummer: **86110209.3**

(22) Anmeldetag: **24.07.86**

(51) Int. Cl.⁴: **B60D 1/00**

(30) Priorität: **09.08.85 DE 3528650**

(43) Veröffentlichungstag der Anmeldung:
**04.03.87 Patentblatt 87/10**

(84) Benannte Vertragsstaaten:
**AT BE CH DE FR GB IT LI NL**

(71) Anmelder: **PEKA-Fahrzeugbau GmbH & Co. KG**
**Rheinstrasse 116**
**D-7500 Karlsruhe 21(DE)**

(72) Erfinder: **Konrad, Peter, Dipl.-Ing.**
**Hans-Thoma-Strasse 28**
**D-7552 Durmersheim(DE)**
Erfinder: **Agsten, Günter**
**Schulstrasse 4**
**D-6729 Neuburg(DE)**
Erfinder: **Gradmann, Gerhard, Dipl.-Ing.**
**Enzstrasse 1e**
**D-7514 Eggenstein-Leopoldshafen(DE)**
Erfinder: **Wolz, Edgar**
**Adalbert-Stifter-Strasse 1**
**D-7500 Karlsruhe 51(DE)**

(74) Vertreter: **Schnabel, Hartmut, Dr.-Ing.**
**Am Feldrain 13**
**D-6940 Weinheim(DE)**

(54) **Abnehmbare Anhängerkupplung.**

(57) Abnehmbare Fahrzeug-Anhängerkupplung, insbesondere für Personenkraftwagen, mit einer Haltevorrichtung (10) mit einem Aufnahmeteil (11) für die lösbare Aufnahme des Schaftes (22) einer mit Kupplungskugel (21) versehenen Kugelstange (20). Der Schaft (22) weist eine Ausnehmung (23) auf, bevorzugt zur Bildung eines hakenförmigen Kopfes (24), der mittels einer exzentrisch zum Schaft (22) drehbar gelagerten Schwenkklaue (30) und einem verschiebbaren Klemmkeil (40) formschlüssig und selbsttätig durch Federbelastung nachstellend in Betriebsposition zuverlässig arretierbar ist.

F I G. 1

## ABNEHMBARE ANHÄNGERKUPPLUNG

Die Erfindung betrifft eine abnehmbare Fahrzeug-Anhängerkupplung, insbes. für Personenkraftwagen, mit am Fahrzeugheck bevorzugt verdeckt zu montierender Haltevorrichtung mit einem Aufnahmeteil für die lösbare Aufnahme des Schaftes einer mit Kupplungskugel versehenen Kugelstange, wobei deren Schaft eine Ausnehmung aufweist, um durch ein darin verschwenkbares Element formschlüssig in Betriebsposition arretiert zu werden.

Eine solche Kupplkung ist aus der DE-OS 29 22 098 bekannt. Dort ist allerdings eine sehr tiefe und sich über die ganze Höhe des Schaftes einschließlich eines Teils der Kugelstange erstreckende Nut erforderlich, welche eine Schwächung der Kugelstange bedingt, die durch entsprechende Vergrößerung des Querschnitts kompensiert werden muß, zumal weitere Querbohrungen den Schaft schwächen. Zwar scheint eine Fehlpositionierung beim Einsetzen der Kugelstange bzw. ihres Schaftes ausgeschlossen und die Entnahme ohne Werkzeug leicht handhabbar zu sein aber die Herstellung von Kugelstange und Schaft muß als recht aufwendig angesehen werden, wobei hinzukommt, daß die Form des Schaftes und der ihn aufnehmenden Hülse unrund ist. Im übrigen ist das selbsttätige Nachstellen nicht vollumfänglich gewährleistet infolge von dies behindernden gegengerichteten Reibungskräften.

Der Erfindung liegt daher die Aufgabe zugrunde, die vorgenannten Nachteile des Standes der Technik zu beseitigen und die demontierbare Anhängerkupplung so zu gestalten, daß alle ihre Teile leicht und kostengünstig zu fertigen sind. Darüberhinaus sollten alle der Sicherung in Betriebsposition dienenden Elemente unverlierbar befestigt, formschlüssig wirksam und selbsttätig nachstellbar sein, um höchsten Sicherheitsanforderungen genügen zu können.

Diese Aufgabe ist bei einer Anhängerkupplung der eingangs genannten Art dadurch gelöst, daß im Aufnahmeteil der Haltevorrichtung unverlierbar integriert sind:

(a) eine Schwenkklaue, die exzentrisch zur Mittelachse des Aufnahmeteiles bzw. des Schaftes derart angeordnet ist, daß ihre Mitnahmenocke vom einzuschiebenden Schaft mitnehmbar, und daß ihre Arretiernocke bei weiterem Verschwenken gegen Federbelastung in die kompatible Form der Ausnehmung des Schaftes einrastbar ist;

(b) ein mit einer bevorzugt von Hand betätigbaren Zugstange versehener Klemmkeil, der etwa bei Erreichen der Betriebsposition des Schaftes von einer wegschwenkenden Kante der Klaue freigegeben und selbsttätig unter Federbelastung zu einer kompatibel gestalteten Anpreßfläche der Schwenkklaue hin verschiebbar ist, um diese gegen ein ungewolltes Rückschwenken und Entarretieren des Schaftes im Betriebszustand selbsttätig nachstellend zu sichern.

Bei einer bevorzugten Ausführungsform sind sowohl der Schaft der Kugelstange wie die ihm zugeordnete Aufnahmekammer bzw. -hülse der Haltevorrichtung konisch ausgebildet, um einen besonders festen und spielfreien Sitz zu gewährleisten. Der Querschnitt ist bevorzugt kreisförmig ausgebildet, was auch mit Ausnahme der Schwenkklaue für die übrigen Verrastungselemente gelten kann, die in entsprechenden zylindrischen Bohrungen des Aufnahmeteils verschiebbar gelagert sind. Dabei ist der Klemmkeil nach einer besonders vorteilhaften Ausführungsform so ausgebildet, daß er in Ruhestellung der Haltevorrichtung, also bei entnommenem Schaft, stets in vorgespannter Bereitschaftsstellung verbleibt, um bei Wiedereinsetzen des Schaftes selbsttätig die Schwenkklaue zu arretieren, sobald Schaft und Schwenkklaue sich der endgültigen Betriebsstellung ausreichend angenähert haben.

Der Klemmkeil selbst wird normalerweise mit einer Zugstange ausgestattet und mit einem an der Kugelstange befestigten Betätigungshebel betätigt, d.h. aus seiner Arretierungsposition in Bezug auf die Schwenkklaue herausgezogen. Dabei weist der Betätigungshebel bevorzugt Organe auf zum selbsttätigen Verrasten mit einem entsprechend ausgebildeten Zugstangenende. Auf diese Weise ist es möglich, Schaft und Betätigungshebel gemeinsam und vollständig aus der am Fahrzeugheck montierten Haltevorrichtung zu entnehmen. Weitere vorteilhafte Ausführungsformen der Erfindung sind in Unteransprüchen gekennzeichnet.

Eine solche Fahrzeug-Anhängerkupplung erfüllt die vorgenannte Aufgabe in jeder Beziehung. Sie gewährleistet eine ausreichend stabile, steife und spielfreie Verbindung und stellt sicher, daß die Kugelstange bzw. deren Schaft beim Einsetzen in die Haltevorrichtung bzw. deren Aufnahmeteil ohne Gebrauch von Hilfsmitteln und unter Vermeidung jedweder Fehlpositionierung durch Federdruck automatisch in den arretierten Zustand gelangt.

Gegenüber der Anhängerkupplung gemäß DE-OS 30 04 283, in der schon ein als Schieber bezeichneter federbelasteter Klemmkeil mit Zugstange vorgesehen ist, weist die vorliegende Erfindung u.a. folgende Unterschiede und Vorteile auf: Hier gelangt die Vorrichtung durch Einführung des Schaftes nicht selbsttätig in den Betriebszustand, sondern es muß anschließend von Hand arretiert werden durch i.d.R. recht schwergängiges Betätigen eines Exzenterhebels.

Im folgenden wird die Erfindung anhand eines Ausführungsbeispieles näher erläutert, aus dem sich weitere Merkmale und Vorteile der Erfindung entnehmen lassen. In der zugehörigen Zeichnung zeigen

Fig. 1 eine Gesamtansicht von hinten mit Teil-Längsschnitt durch das Aufnahmeteil;

Fig. 2 einen Querschnitt entlang der Schnittlinie 1-1 gemäß Fig. 1;

Fig. 3 einen Längsschnitt durch das Aufnahmeteil mit eingeschobenem Schaft in drei verschiedenen Positionen.

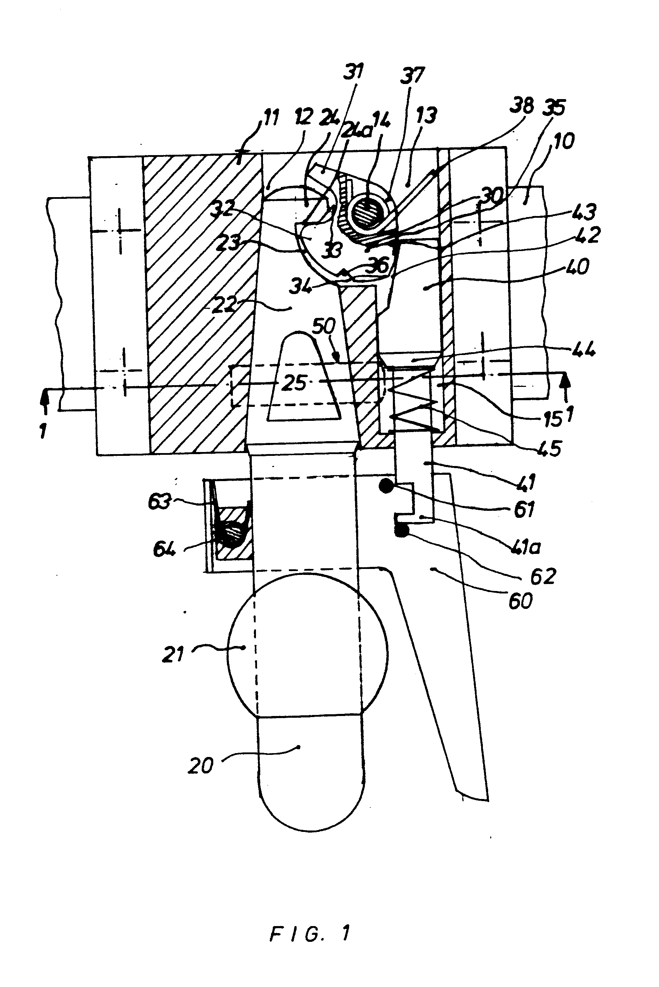

Fig. 1 zeigt die Gesamtansicht mit der zumeist als Rund-oder Vierkantrohr ausgebildeten Haltevorrichtung 10 und dem damit verbundenen bzw. daran befestigten Aufnahmeteil 11, das aus Stahl gegossen oder geschmiedet oder auch aus Leichtmetalldruckguss hergestellt sein kann. Das Aufnahmeteil 11 weist eine Aufnahmekammer bzw -hülse 12 auf zur Aufnahme des Schaftes sowie einen Freiraum 13 zur Aufnahme der Schwenkklaue 30. Diese kann aus Stahl spanabhebend oder als Form-Sinterteil hergestellt sein und ist drehbar gelagert auf dem Achsbolzen 14. Mit 15 ist die bevorzugt zylindrische Bohrung für den entsprechend geformten Klemmkeil 40 bezeichnet, der ein oder mehrstückig aus Stahl hergestellt sein kann, eine Zugstange 41 aufweist mit einem Endstück 41 a zum Ankoppeln an die Organe 61, 62 des Betätigungshebels 60. Dieser kann auf Blech oder - schlagfestem Kunststoff bestehen.

Die Kugelstange 20 einschließlich Schaft 22 auf der einen und Kupplungskugel 21 auf der anderen Seite ist bekanntermaßen aus Stahl Nr. 37 oder 52 gefertigt. In der Figur 1 sieht man sie in Rückansicht, gewissermaßen vom Anhänger aus. Eine Besonderheit ist die Ausnehmung 23 im Schaft 22, die am Ende des Schaftes 22 einen hakenförmigen Kopf 24 schafft, welcher der Verrastung in Verbindung mit der Schwenkklaue 30 dient. Diese weist eine obere Mitnahmenocke 31 auf und eine untere Arretiernocke 32, welche sich an die Unterkante 24 a des hakenförmigen Kopfes 24 presst, während der Kopf 24 selbst von der Aussparung 33 der Schwenkklaue 30 aufgenommen wird. Weiterhin weist die Schwenkklaue 30 eine Kante 34 auf sowie eine Anpressfläche 35 für den Klemmkeil 40.

Ihre Kerbe 36 dient der Arretierung in Ruhestellung (vgl. unten).

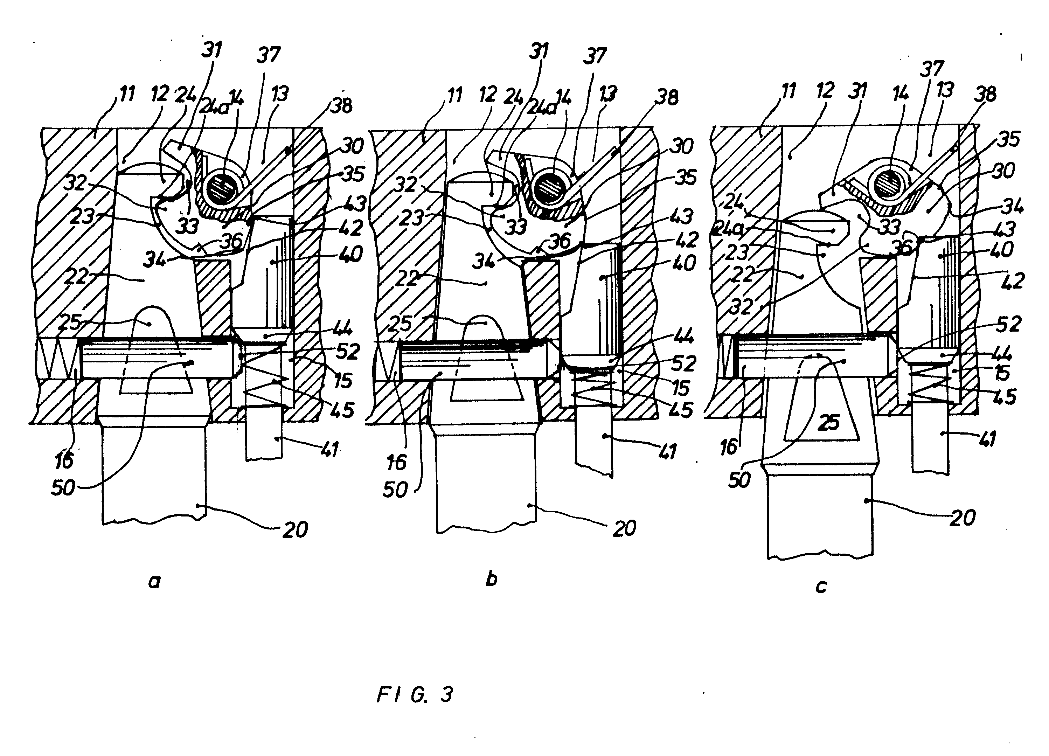

In Figur 1 ist (ebenso wie in Figur 3) ein Teil der Schwenkklaue weggebrochen, um eine in der Schwenkklaue 30 befindliche Nut 37 zu zeigen, samt der darin befindlichen aus Federstahl bestehenden Torsionsfeder 38. Diese hat die Tendenz, die Schwenkklaue im Gegenuhrzeigersinn zu verstellen.

Der bevorzugt zylindrisch ausgebildete Klemmkeil 40 weist eine Anflächung 42 auf, welche unter dem nach oben gerichteten Druck der Ringfeder 45 gegen die Anpressfläche 35 der Schwenkklaue 30 drückt und diese selbsttätig im Uhrzeigersinn nachstellend in Betriebsstellung arretiert. Die Kante 43 des Klemmkeils 40 dient zur Arretierung der beiden Verrastungsteile 30 und 40 in Ruhestellung, wobei die Kante 43 in die Kerbe 36 zu liegen kommt. Der Basisbereich des Klemmkeils 40 ist mit 44 bezeichnet. Er ist zur Zugstange 41 hin konisch verjüngt, was von Bedeutung ist in Bezug auf die Mitverrastung des Verrastungselementes 50, das in Figur 1 nur strichliert angedeutet ist und oberhalb der Zeichenebene liegt.

Zu ergänzen ist, daß die vorzugsweise zylindrisch ausgebildeten und in entsprechenden Bohrungen oder Ausnehmungen verlaufenden Verrastungselemente 40 und 50 gegen Verdrehen gesichert sind, zweckmäßigerweise durch das Prinzip Längsnut/Schraubdorn, was in den Figuren nicht dargestellt wurde.

Im folgenden sei die Funktion des Betätigungshebels 60 beschrieben: Er ist mittels an der Kugelstange 20 befestigtem Bolzen 64 kippbar gelagert, wobei eine Rückstellfeder 63 ihn im Gegenuhrzeigersinn in Richtung Aufnahmeteil 11 drückt. Beim Einschieben des Schaftes 22 passiert der Stift 61 ungehindert das Endstück 41a, während der Stift 62 (wie gezeichnet) daran anstößt. Bei der Entriegelung wird der Betätigungshebel 60 vorübergehend gezogen bzw. gekippt, womit der Stift 61 in die Aussparung des Zugstangenendstückes 41a wandert und bei der Entnahme der Kugelstange 20 zunächst auch den Klemmkeil 40 mitnimmt, d.h. nach unten gegen die Kraft der Ringfeder 45 zieht. Zur endgültigen Entnahme des Schaftes 22 muß dann der Betätigungshebel 60 wieder losgelassen werden, womit eine Entkopplung des Stiftes 61 erfolgt, sodaß die Kugelstange 20 samt Hebel 60 gänzlich entnommen werden kann.

Es versteht sich, daß in diesem Zusammenhang auch andere Ausführungsformen denkbar sind, insbes. kommt auch ein Zurückfahren des Klemmkeils 40 zwecks Entriegelung durch mittelbare Betätigung, z.B. mittels Zugseil vom Kofferraum aus in Frage.

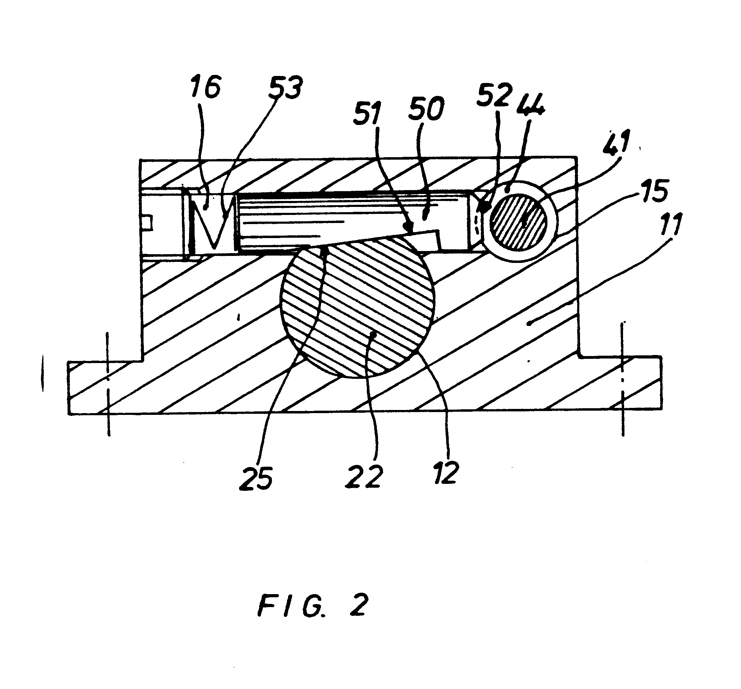

Figur 2 zeigt einen Querschnitt entlang der in Figur 1 eingezeichneten Schnittlinie 1-1. Hier wird nun vorallem die Zuordnung des in Figur 1 nur angedeuteten Verrastungselementes 50 deutlich, wie es sich im Falle einer besonders zuverlässigen Ausführungsform zur eindeutigen Sicherung des Schaftes 22 in Bezug auf Verdrehen empfiehlt. Das Verrastungselement 50 ist in einer zylindrischen Bohrung 16 gelagert, die -wie gezeichnet -quer und außermittig zur Achse der Aufnahmekammer 12 verläuft und in die Bohrung 15 des Klemmkeils 40 mündet. Dabei weist das bolzenförmige Verrastungselement 50 eine z.B. durch entsprechendes Anfräsen hergestellte Keilfläche 51 auf, die sich unter Wirkung der Druckfeder 53 in Richtung Bohrung 15 verstärkt an die Anflächung des Schaftes 22 anpresst und diesen damit zusätzlich arretiert. (Die konische Verjüngung der Stirnseite 52 des Verrastungselementes 50 und ihr Zusammenwirken mit der Bewegung des Klemmkeiles 40 in dessen Basisbereich 44 wird im Zusammenhang mit Figur 3 erläutert).

Aus Figur 2 wird insbes. die Lage der Verrastungselemente 40 und 50 in Beziehung zum Schaft 22 deutlich. Dabei liegt die Längsachse des Klemmkeils 40 bevorzugt parallel zur Längsachse des Schaftes 22 bzw. der Aufnahmekammer 12 für denselben. Das Verrastungselement 50 bzw. dessen Bohrung 16 stehen bevorzugt quer hierzu. Die Bohrung 16 kann durch ein nicht näher bezeichnetes Element verschlossen werden. Eine Abdeckung der übrigen Bohrungen des Aufnahmeteils 11 empfiehlt sich ebenfalls.

Figur 3 zeigt die Funktion der erfindungsgemäßen Anhängerkupplung. Figur 3a zeigt die Betriebsposition, Figur 3c die Ruheposition vor der endgültigen Ent nahme bzw. vor der Verrastung des einzuführenden Schaftes. Figur 3b zeigt eine Zwischenposition. Die Funktion wird nun gemäß der Reihenfolge 3a, 3b, 3c erklärt, d.h. gemäß der Entriegelung und Entnahme des Schaftes der Kugelstange.

In Betriebsposition (Fig. 3a) drückt das Verrastungselement 50 im Bild nach rechts und damit auf die Anflächung 25 des Schaftes. Der Klemmkeil 40 drückt im Bild nach oben mit seiner Anflächung 42 gegen die Anpressfläche 35 der Schwenkklaue 30, und diese wiederum mit ihre Arretiernocke 32 gegen die Unterkante 24a des hakenförmigen Kopfes 24. Alle drei vorgeschilderten Verrastungsbewegungen sind selbsttätig nachstellender Art. Der Schaft liegt also in einer genau definierten Position fest.

Den Beginn der Entriegelung zeigt Figur 3b. Der Klemmkeil 40 wird durch Betätigung des Hebels 41 nach unten bewegt. Seine Kante 43 passiert soeben die Kante 34 der Schwenkklaue 30. Im nächsten Moment wird diese frei und die Schwenkklaue 30 kann sich unter dem Einfluß der Torsionsfeder 38 im Gegenuhrzeigersinn bewegen, unter der Voraussetzung, daß der Schaft 22 weiter nach unten und außen bewegt wird. Schon vor Erreichen des Zustandes gem. Fig. 3b hat die Abwärtsbewegung des Klemmkeils 40 ein Verschieben des Verrastungselementes 50 nach links im Bild um wenige mm bewirkt, was ausreicht, um zwischen Keilfläche 51 und Anflächung 25 das zur Entnahme des Schaftes 22 notwendige Spiel zu gewährleisten.

In Figur 3c ist der Schaft gerade soweit entnommen, daß die drei Verrastungselemente 30, 40, 50 ihre Ruhestellung erreicht haben. Der Schaft kann nun ganz entnommen werden samt Betätigungshebel 60, ohne daß sich die Verrastungselemente noch weiter bewegen. Umgekehrt betrifft Fig. 3c im Falle des Einbringens des Schaftes 22 in das Aufnahmeteil 11 die Position, in der der Kopf 24 direkt vor der Mitnahmenocke 31 der Schwenkklaue 30 steht , und alsbald die Schwenkklaue 30 im Uhrzeigersinn gegen Federkraft in Richtung Verrastungsposition bewegt. Weiter eingeschoben gemäß Fig. 3b passiert die Kante 34 die Kante 43. Nun schnellt der Klemmkeil 40 unter Federkraft nach oben in die Verrastungsstellung und gibt dabei Raum für die Verschiebung und zusätzliche Verrastung durch das Element 50.

Es sei nochmals betont, daß die Arretierung des Schaftes gegen Verdrehen auch auf andere Weise als durch das Element 50 erreicht werden und dieses evtl. auch ganz entfallen kann.

Bei obigem Ausführungsbeispiel wird die Kugelstange bzw. deren Schaft etwa senkrecht von unten nach oben eingeführt. Es ist im Rahmen der Erfindung aber auch möglich, den Schaft schräg - wie im Falle der DE-OS 30 04 285 -oder evtl. auch waagrecht in das entsprechend angeordnete Aufnahmeteil einzusetzen.

BEZUGSZIFFERNLISTE

10 Haltevorrichtung
11 Aufnahmeteil
12 Aufnahmekammer bzw. -hülse für Schaft 22
13 Freiraum für Schwenkklaue 30
14 Achsbolzen für Schwenkklaue 30
15 Bohrung für Klemmkeil 40
16 Bohrung für Verrastungselement 50
20 Kugelstange
21 Kupplungskugel
22 Schaft der Kugelstange 20
23 Ausnehmung im Schaft 22
24 Kopf bzw. Haken am Ende des Schaftes 22
24a Unterkante des Hakens 24

25 Anflächung des Schaftes 22
30 Schwenkklaue
31 Mitnahmenocke der Schwenkklaue 30
32 Arretiernocke der Schwenkklaue 30
33 Aussparung der Schwenkklaue 30
34 Kante der Schwenkklaue 30
35 Anpreßfläche der Schwenkklaue 30
36 Kerbe der Schwenkklaue 30
37 Nut zur Aufnahme einer Feder 38
38 Torsionsfeder
40 Klemmkeil
41 Zugstange 41a Endstück der Zugstange 41
42 Anflächung des Klemmkeils 40
43 Kante des Klemmkeils 40
44 Basisbereich des Klemmkeils 40
45 Ringfeder
50 Verrastungselement
51 Keilfläche des Verrastungselementes 50
52 Stirnseite des Verrastungselementes 50
53 Druckfeder
60 Betätigungshebel
61,62 Organe zum Verrasten mit der Zugstange 41
63 Rückstellfeder
64 Lagerbolzen für Hebel 60

## Ansprüche

1. Abnehmbare Fahrzeug-Anhängerkupplung, insbesondere für Personenkraftwagen, mit am Fahrzeugheck bevorzugt verdeckt zu montierender Haltevorrichtung (10) mit einem Aufnahmeteil (11) für die lösbare Aufnahme des Schaftes (22) einer mit Kupplungskugel (21) versehenen Kugelstange (20), wobei deren Schaft (22) eine Ausnehmung (23) aufweist, um durch ein darin verschwenkbares Element formschlüssig in Betriebsposition arretiert zu werden, **dadurch gekennzeichnet**, daß im Aufnahmeteil (11) unverlierbar integriert sind:

(a) eine Schwenkklaue (30), die exzentrisch zur Mittelachse des Aufnahmeteiles (11) bzw. des Schaftes (22) derart angeordnet ist, daß ihre Mitnahmenocke (31) vom einzuschiebenden Schaft (22) mitnehmbar, und daß ihre Arretiernocke (32) bei weiterem Verschwenken gegen Federbelastung in die kompatible Form der Ausnehmung (23) des Schaftes (22) einrastbar ist,

(b) ein mit einer betätigbaren Zugstange (41) versehener Klemmkeil (40), der etwa bei Erreichen der Betriebsposition des Schaftes (22) von einer wegschwenkenden Kante (34) der Klaue (30) freigegeben und selbsttätig unter Federbelastung (45) zu einer kompatibel gestalteten Anpreßfläche (35) der Schwenkklaue (30) hin verschiebbar ist, um diese gegen ein ungewolltes Rückschwenken und Entarretieren des Schaftes (22) im Betriebszustand selbsttätig nachstellend zu sichern.

2. Anhängerkupplung nach Anspruch 1, **dadurch gekennzeichnet**, daß der Schaft (22) der Kugelstange (20) ebenso wie die ihm zugeordnete Aufnahmekammer bzw. -hülse (12) des Aufnahmeteils (11) als Konus mit kreisförmigem Querschnitt ausgebildet sind.

3. Anhängerkupplung nach Anspruch 1 oder 2, **dadurch gekennzeichnet**, daß die Ausnehmung (23) im endständigen Teil des Schaftes (22) angeordnet ist, sich ausreichend in Richtung Achsmitte erstreckt um endseitig einen hakenförmigen Kopf (24) zu schaffen, der in eine kompatibel geformte Aussparung (33) zwischen Mitnahmenocke (31) und Arretiernocke (32) einrastbar ist und dann in Betriebsposition zumindest mit einem Teil seiner bevorzugt etwa rechtwinklig zur Längsachse des Schaftes (22) verlaufenden Unterkante (24a) auf der Arretiernocke (32) aufliegt.

4. Anhängerkupplung nach einem der vorangehenden Ansprüche, **dadurch gekennzeichnet**, daß der Klemmkeil (40) in einer neben der Aufnahmekammer (12) angeordneten, vorzugsweise zylindrischen Bohrung (15) gelagert und in den Freiraum (13), in dem die Schwenkklaue (30) angeordnet ist, verschiebbar ist derart, daß eine geringfügig schräg zu seiner Verschiebeachse vorhandene Anflächung (42) auf einer kompatiblen Anpreßfläche (35) der Schwenkklaue (30) zum Anliegen kommt und diese unter Federkraft (45) selbsttätig nachstellend verkeilt.

5. Anhängerkupplung nach einem der vorangehenden Ansprüche, **dadurch gekennzeichnet**, daß die Schwenkklaue (30) in Nähe des Kopfes (24) drehbar gelagert ist, und eine Nut oder dgl. (37) aufweist zur Aufnahme einer Torsionsfeder (38), welche die Schwenkklaue (30) in die Entarretierungsstellung drückt, sobald der Schaft (22) bei Entnahme dieselbe freigibt.

6. Anhängerkupplung nach einem der vorangehenden Ansprüche, **gekennzeichnet durch** eine Ringfeder oder dgl. (45), welche den innerhalb des Aufnahmeteils (11) befindlichen Teil der Zugstange (41) umgibt, an der Basis des Klemmkeils (40) anliegt und diesen ständig in Richtung Schwenkklaue (30) drückt.

7. Anhängerkupplung nach einem der vorangehenden Ansprüche, **dadurch gekennzeichnet**, daß die Schwenkklaue (30) eine Kerbe (36) aufweist, die nach Entnahme des Schaftes (22) und Rückschwenken der Schwenkklaue (30) in eine kompatibel geformte, endständige Kante oder dgl. (43) des Klemmkeils (40) einrastet zur Fixierung beider Elemente in Ruheposition

8. Anhängerkupplung nach einem der vorangehenden Ansprüche,**dadurch gekennzeichnet**, daß der Schaft (22) unterhalb seiner Ausnehmung (23) eine Anflächung (25) aufweist, der ein unverlierbar in einer Bohrung oder dgl. (16) des Aufnahmeteils (11) in der Ebene der Anflächung (25) verschiebbar gelagertes, eine Keilfläche (51) aufweisendes weiteres Verrastungselement (50) zugeordnet ist.

9. Anhängerkupplung nach Anspruch 8,**dadurch gekennzeichnet**, daß die Bohrung (16) quer und außermittig zur Achse der Aufnahmekammer bzw. -hülse (12) verläuft und in die Bohrung (15) für den Klemm keil (40) mündet, derart, daß die zumindest teilweise angeschrägte Stirnseite (52) des Verrastungselementes (50) zur Anlage gelangen kann an der Umfangsfläche des Klemmkeils (40), die in ihrem Basisbereich (44) kompatibel angeschrägt bzw. konisch verjüngt ist, um das in Betriebsposition unterhalb der Basis des Klemmkeils (40) unter Federdruck etwas in die Bohrung (15) hineinragende und vermöge gleichzeitigem Anlegen seiner Keilfläche (51) an die Anflächung (25) des Schaftes (22) dessen etwaiges Verdrehen durch selbsttätiges Nachstellen unterbindende Verrastungselement (50) beim Betätigen der Zugstange (41) zur Entriegelung des Schaftes (22) gegen dessen Federbelastung zurückzuschieben.

10. Anhängerkupplung nach einem der vorangehenden Ansprüche,**dadurch gekennzeichnet**, daß in Schaftnähe an der Kugelstange (20) ein Betätigungshebel (60) kippbar befestigt ist, welcher Organe (61,62) aufweist zum selbsttätigen Verrasten mit dem Endstück (41a) der Zugstange (41) und des Klemmkeils (40) beim Einschieben des Schaftes (22) in die Aufnahmekammer (12) sowie zum Ausrasten aus dem Endstück (41a), wenn der Betätigungshebel (60) vorübergehend gezogen bzw. gekippt und der Schaft (22) samt Betätigungshebel (60) entnommen wird.

FIG. 1

FIG. 2

FIG. 3

0 212 322